# EUROPEAN PATENT APPLICATION

(11) **EP 1 247 769 A1**
(43) Date of publication of application: **09.10.2002**
(21) Application number: 02007122.1
(22) Date of filing: 28.03.2002
(51) Int. Cl.: B65G 47/08, B65G 47/29, B65B 35/44

(54) **Grouping device for making container groups**

(30) Priority: 03.04.2001 IT BO010198
(71) Applicant: Prasmatic S.r.l., 40050 Monteveglio, Province of Bologna (IT)
(72) Inventor: Orsi, Mario, 40135 Bologna (IT)
(74) Representative: Porsia, Dino, Dr.

(57) **Abstract**

The prongs (R) are fixed in pairs on bushings (20) which can run upon prismatic or splined bars (16) and the same bushings are provided with annular grooves (21) which co-operate with a closed-ring guide (G) connected to each guide or side wall (9) of the channels (C1, C6), in which are running the rows of products, the whole in such a manner that upon variation of the distance between said guides, by means of the relative screws or other self-centring adjustment means, it is varied simultaneously the distance between the prongs each time that the apparatus is adapted to the size of the products (P) to be worked.

## Description

The invention relates to prong apparatuses which are used for the continuous separation in groups of pre-established quantity, of bottles or other products which are coming in single file or row from a feeding line and which must be subjected to further processing, for example a packaging phase. The apparatuses which are referred to, provide that the products move in single row upon a conveyor, laterally to which are moving prongs capable to disappear which in a first phase insert themselves upwardly before the head-product of the row and accompany the same in its movement but with a speed which is lower with respect to the advancement speed of the underlying conveyor. In a second phase, other prongs are inserted downstream of the group of products to be separated, while the upstream prongs accelerate and disappear, so that the group of products previously isolated, run with the speed of the underlying conveyor and is separated from the products downstream retained by the prongs which have been inserted in a second phase and which act then like those which were operating in the first phase, in order to ensure continuity to the separation cycle.

In the known prior art, when it is required to adjust these apparatuses to the size variations of the products, it is known to modify by remote control the relative rotation speed of the motorization axis of the prongs, which are connected between them with an electric shaft and by means of respective speed and phase electronic control motors. It is also known to operate upon adjusting screws with opposite thread and with differentiated pitch, or upon alternative systems, to adjust in self-centring manner the width of the channels inside which are running the rows of product and to adjust the position of the pertaining advancement conveyor of the groups of separed products. Currently however it is not known to adjust in a quick and precise manner, the distance between the prongs to adjust them to the modified widths of the guide channels, so that it is necessary to change each time the several combs with the said prongs, with the complication and the expenses which are deriving therefrom.

The invention intends to obviate to these drawbacks and to the limitation of the prior art, with the following idea of solution. The prongs are fixed in pair upon bushings which can run upon prismatic or grooved bars and the same bushings are provided with annular groove which co-operate with suitably structured and additional portions of the guides which form the side-walls of the channels in which are running the rows of products, the whole in such a manner that upon variation of the distance between said guides, by means of the screws or other means of known type, simultaneously the distance between the prongs is varied each time the apparatus is adapted to the size of the products to be worked.

Further features of the invention, and the advantage deriving therefrom, will appear better evident from the following description made with reference to the figures of the attached sheets of drawings, in which:
- Figure 1 is a lateral view and with portions in section of the improved prong apparatus is referred to;
- Figure 2 is a plan view of the apparatus of Figure 1;
- Figure 3 shows further details of the apparatus taken along the section line III-III of Figure 1;
- Figure 4 shows diametrically sectioned of one the bushes with the prongs;
- Figure 5 shows other details of the bush with the prongs sectioned along the line V - V of Figure 4.

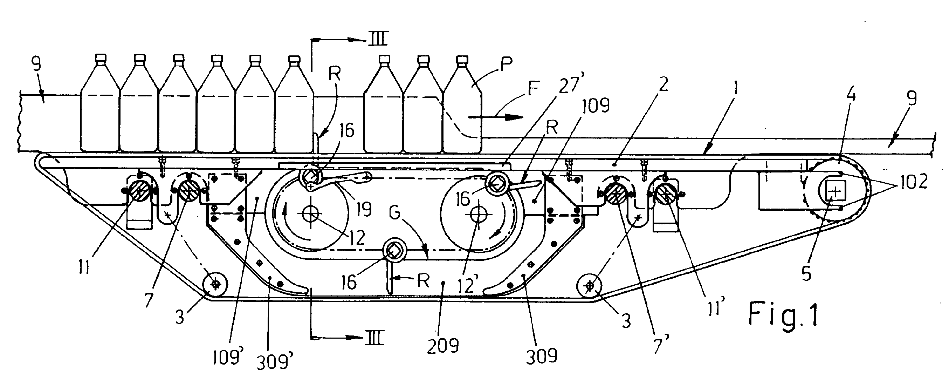

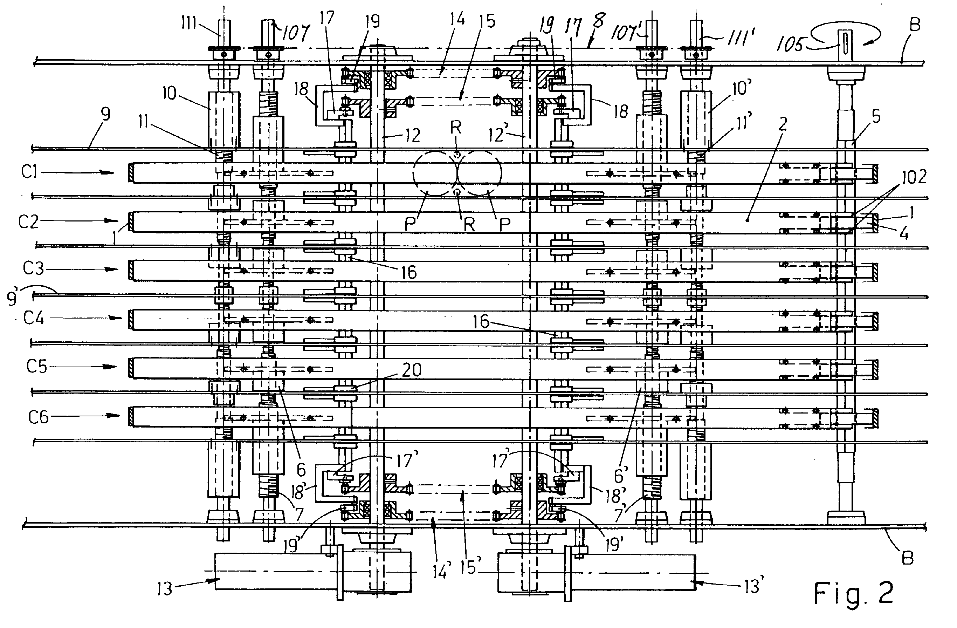

From Figures 1 and 2 it appears clear the functioning of the prong separator referred to. In these Figures, with numeral reference 1 is indicated one of the belt or slat conveyors, upon the upper, rectilinear and horizontal portion of which, rests the row of products P which must be separated in groups of pre-established number, for example in groups of three. With its upper portion the said conveyor runs in the direction indicated by the arrow F and slides upon a rectilinear guide 2, while with the lower portion is guided upon a pair of tensioning idle rollers 3 supported by means of supports connected to the lower portion of said guide 2. According to the invention, the conveyors are frontally guided upon positive profile pulleys 4 placed with their sides between the forked ends 102 of each guide 2 and assembled with the possibility of axial movement upon a prismatic or splined shaft 5 rotatably supported at the ends by the base B of the machine and which by its end 105 is connected to a drive source, not shown, which transmits to the conveyor 1 the movement in the direction of the arrow F, with a pre-arranged and constant speed. It is clear how, with such solution, each time that the reciprocal distance of the guides 2 with the conveyors 1 is varied, the pulleys 4 move axially upon the drive shaft 5, by remaining keyed upon this latter. In order to adjust the reciprocal distance between the conveyors 1 of the several channels C1-C6 of the apparatus, the guides 2 are fixed to underlying pairs of nut screws 6, 6', having right and left thread and with differentiated pitch, co-operating with the corresponding threads of screws 7, 7', obtained upon shafts 107, 107', rotatably supported by the base B of the machine and inter-connected by means of a positive drive 8, for example with pinions and chain, the whole in such a manner that by imparting a rotation to said shafts, with manual or servo-controlled means, it is possible to adjust in self-centring manner the distance between the conveyors 1, with a known solution.

The conveyor channels C1-C6 of the product, are inferiorly defined by the conveyors 1 and are laterally defined by rectilinear guide side-walls 9 fixed to underlying pairs of nut-screws 10, 10' with right and left thread and differentiated pitch, co-operating with corresponding screws 11, 11' obtained upon shafts 111, 111', rotatably supported by the base B of the machine and inter-connected by a positive transmission 8 or other, with independent drive, so that with the rotation of said shafts it is possible to adjust in self-centring manner the distance between the side-walls 9, except for the central side wall 9', which is steady.

The prong device which provides to the separation of pre-established groups of products from the continuous flow of the same products P which run in the channels C1-C6 and which by means of conveyors not shown are transferred upon the conveyor 1 of each of these channels, comprises in the middle portion of the same conveyor 1, under its upper portion, a pair of transversal shafts 12, 12', rotatably supported by means of the base B of the machine and connected with one end to respective drive units 13, 13' with electronic control of speed and phase motors, for example with brushless motors, by means of which the same shafts can rotate in the same direction and with the same speed, or with differentiated speeds, according to the logic more ahead mentioned. With the variation of the size of the products to be treated, from the switchboard it is possible to adjust the rotation speed of the units 13, 13' to adapt the same to the different size, according to solutions already known.

Already according to the known art, upon the ends of the shafts 12, 12' there are assembled the pinions of pairs of chain conveyors 14, 14', 15, 15', having the same features, the outer ones 14, 14' of which have the same pinions partly rotatable upon the shaft 12 and partly keyed upon the shaft 12', to derive the rotation from said shaft, while the pinions of the inner conveyors 15, 15' are partly rotatable upon the shaft 12' and partly keyed upon the shaft 12 to derive the motion from this component. The prongs R for the formation of groups of products are, in the referred example in units of three for each transport channel and are fastened with reciprocal equi-distance to said conveyors 14, 14', 15, 15'. More particularly the prongs R are actually fastened, like the teeth of a comb, with three bars 16, reciprocally equispaced, which at the ends are provided with supports 17, 17', hinged to the chains of the inner conveyors 15, 15', which with their upper portion run in the same direction F of the connection 1 but at a lower speed. The constraint of the supports 17, 17' to the chains of said conveyors, is such that the bars 16 may rotate around their longitudinal axis. To the same ends of the bars 16 are fixed U-shaped supports 18, which pass over the inner conveyors 15, 15' and which with the other end are arranged laterally to the chains of the outer conveyors 14, 14' to which are connected by means of respective connecting rods 19, 19'. The inner conveyors 15, 15' transmit to the bars 16 with the prongs the translation at the correct speed, while the outer conveyors 14, 14' transmit to the same bars 16 the axial rotation which carries the same prongs to insert themselves with vertical disposition between two consecutive products of the flow which runs in each channel C1-C6 and which instead contemplates the same prongs to oscillate forwardly and progressively disappear under the conveyor 1 to disengage from the group of products previously isolated by means of following pairs of prongs both of them projecting from the upper portion of the conveyor 1, according to known laws and solutions.

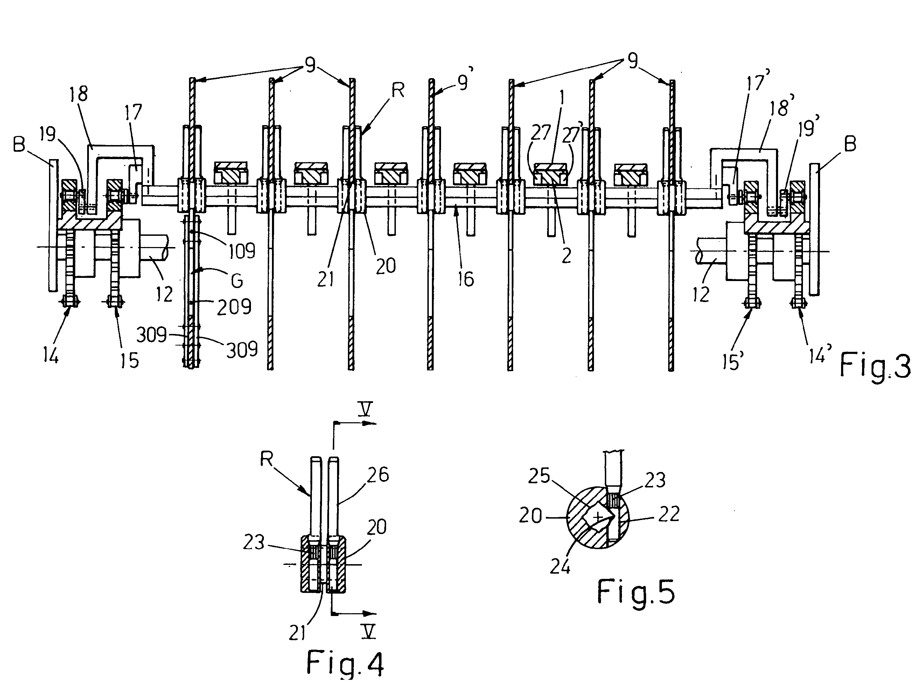

As anticipated in the introduction of the present application, upon the variation of the size of the products it is presently required the substitution of the bars 16 together with the prongs. This substitution is no more required with the contribution of the present invention which provides for the bars 16 to be structured with a prismatic or splined section or of other suitable type and which provides, axially movable upon said bars, bushings 20 with conjugate section, like for example from Figures 4 and 5, made with any material which presents a good mechanical resistance and a good smoothness. Good results have been obtained, for example, by making the bushing 20 by injection of suitable plastics inside a mold, for example "nylon" charged with glass-fiber, but it is to be understood that any other material may be used for the purpose. During their formation inside the mold, the bushings 20 are provided with an outer and intermediate annular groove 21, having a width which is slightly superior to the thickness of the rectilinear guides 9 which form the lateral side walls of the channels C1-C6 and on the lateral portions to said groove, the same bushing is provided with a pair of tangential and parallel holes 22 (Fig. 5) in which are pressure inserted, with their initial knurled portion 23 (Fig. 4), the tapered stems of a pair of prongs R provided with a transversal V-shaped recess 24, which matches the corner zone of the prismatic seat 25 with which the bushing 20 may be assembled with a sufficient precision upon the bar 16, so that it results keyed upon this and can, if required, axially move with a good smoothness upon the same bar. It is clear how the bar 16 acts also like a security key, to avoid undesired movements of the prongs in the relative housing holes (22).

When the bars 16 run along the upper portion of the relative control conveyors 14, 14' and 15, 15', the bushings 20 with the prongs run with their groove 21 on the lower edge of the guides or side walls 9 of the channel C1-C6 and the same prongs result disposed on the opposite sides of every guide 9, as from Figures 2 and 3, to be inserted in the empty lateral spaces which exist between the subsequent products P which run on the conveyors 1. It is clear at this point how, by adjusting the relative distance of the guides 9 with the traditional screws 11, 11', or with other suitable means, in the same time and automatically it is adjusted the relative position of the prongs R, without the necessity to operate the problematical and expensive substitution required by the know art.

To adjust the relative position of the bushing 20 with the prongs assembled also upon the bar 16 which are not positioned on the upper portion of the relative control conveyors, there have been associated to the guides 9 means which realise closed-ring guides G (Fig. 1) which co-operate with the said grooves of the same bushings, whatever be the position that the relative bars 16 present on the same control conveyors. The ring guides G present lower and upper rectilinear portions which are parallel between them, and rounded end portions, with the curvature centre on the axis of the shafts 12, 12'. The formation means of the closed ring guides G comprise appendices 109, 109' which extend downwardly the function of the guides 9 and comprises a flat bow shaped bridge 209, having the same thickness of the guides 9, which completes the end curves of the guides G and which realises the lower rectilinear portion of the same ring guides, the ends of said bridge being fixed to said appendices 109, 109' with pairs of curved plates 309, 309', fixed for example with screws and placed in a such position as to not interfere with the bushings 20. It is clear how, during the adjustment of the relative position of the guides 9 upon variation of the size of the products P, the bushings 20 of the prongs co-operate directly with the same guides 9 or with the portions which are added to these which form the closed annular guide G, so that the same prongs adjust themselves to any size variation. It is also clear how this adjustment operation is simple, quick and how it can be, if required, remote realised by means of a servo control.

To operate also upon the products which have a very small dimension, the prongs are preferably provided with a longitudinal flattening 26 which is parallel to the guides 9 and turned towards the interior of the channel, and the guides 2 of each conveyor 1 are provided with longitudinal and opposite recesses 27, 27', which are open also downwardly, in which there can inserted and run the ends of the bushings 20, so that the prongs can be placed at a short distance from the same conveyor 1 and operate upon products with a small size.

## Claims

1. Prong apparatus to divide in predetermined groups products coming in single file from a plurality of feeding lines, comprising:
(a) rectilinear channels (C1 - C6) in which run, arranged in simple file the products and which are laterally defined by means of side walls or guides (9) connected to means for the self-centring adjustment or the reciprocal distance, for the fitting to the size variations of the product,
(b) longitudinally on the bottom of each channel, a rectilinear conveyor (1) upon which is resting the row of products and which is continuously running in the advancement direction of the same product, also this conveyor being connected to self-centring means which maintain the same in the centre line of each channel upon variation of the size of the product to be worked,
(c) in the intermediate portion of said conveyor and under the upper portion of same, a pair of transversal shafts (12, 12') connected for example with respective motion means (13, 13') with electronic control of the speed and of the phase, or with similar means, which drive respective pairs of parallel conveyors for of the chain type (14, 14', 15, 15'), the inner of which (15, 15') rotatably support the ends of respective bars (16) equispaced and parallel to the said shaft, which carry like the teeth of a comb the prongs (R) suitable to realise the separation in groups of the products which are running upon said conveyor (1), the ends of said bars being connected by means of connecting rods (19) to the outer conveyors (14, 14') which provide to the correct orientation of the prongs first in the insertion phase and in the following disengagement phase in and from the groups of products to be separated from the continuous flow,
**characterised by** the fact that the bars (16) of the prongs have a prismatic section, grooved or equivalent and which upon the same bars are keyed with the possibility of axially sliding, bushings (20) which support the prongs (R) and which are provided with a groove or equivalent means (21) suitable to co-operate with a closed-ring or annular guide (G) inferiorly connected and/or integrated to the side walls or guides (9) of the channels of the apparatus, the whole in such a manner that by adjusting the relative position of such guides with known means, automatically there is regulated the relative position of such prongs.

2. Apparatus according to claim 1, in which said annular and closed guide (G) is partly formed by a lower rectilinear portion and by downwardly extending appendices (109, 109') of the guides or side walls of the channels (C1-C6) for the conveyance of the rows of product and which is formed for the remaining portion by means of an overturned bow bridge (209), connected by its ends to said appendices and fixed to these by means of lateral plates (309, 309') which not interfere with the bushings (20) of the prongs (R).

3. Apparatus according to claim 1, in which the bushings with the prongs are made with any materials with good mechanical resistance and good smoothness upon the motion and support bars (16).

4. Apparatus according to claim 3, in which the bushings (20) with the prongs are made by means of injection inside a mold of any suitable plastics, also charged with aggregate, for example nylon charged with glass fibers.

5. Apparatus according to claim 4, in which during the phase of formation inside a mold, the bushings (20) are provided with the axial hole with prismatic section (25) for the assembly with axial sliding upon the relative support bar (16), are provided with the intermediate, external and preferably annular groove (21) for the co-operation with said close-ring guide (G) for the axial registration and are provided with pairs of tangential holes (22) which are' parallel between them, which partially intersect said axial hole (25) and which are provided to house in any suitable manner corresponding end portions of the prongs (R).

6. Apparatus according to claim 5, in which the end portions or stems of the prongs (R), suitable to be assembled in the corresponding holes (22) of the bushings (20), are round and with a diameter which is smaller with respect to the projecting portions, are provided with knurled portions (23) and with such dimensions to be pressure inserted in said holes, said stems of the prongs being provided with a intermediate and transversal recess which matches the shape of the axial hole (25) of said bushing, so that also the bar (16) which engages said hole, acts as a safety key against the axial extraction of the prongs.

7. Apparatus according to the preceding claims, in which the prongs (R) are provided with longitudinal flattened surfaces (26) which are oriented toward the inside of the relative channel and the guide (2) upon which is running the upper portion of the conveyor (1) for the movement of the groups isolated of the prongs, is provided on the sides with longitudinal and also downwardly open recesses (27, 27') in which can be inserted the ends of the bushings (20) of the prongs when the apparatus is adjusted for small sizes, so that the same prongs can be placed close to the side of said conveyor.

8. Apparatus according to claim 1, in which the drive shaft (5) of the conveyor (1) upon which are running the rows of product, has a prismatic section, grooved or of an equivalent type and upon the same are assembled with the possibility of axial displacement the motorization pulleys (4) of said conveyor, which are partially surrounded by the fork shape (102) of the near end of the guide (2) upon which is running the rectilinear portion of each of said conveyors, in such a manner that the pulley moves in combination with said guide.
